# EUROPÄISCHE PATENTANMELDUNG

(11) **EP 1 958 530 A2**
(43) Veröffentlichungstag der Anmeldung: **20.08.2008**
(21) Anmeldenummer: 08101283.3
(22) Anmeldetag: 05.02.2008
(51) Int. Cl.: A45C 5/14

(54) **Einkaufsroller**

(30) Priorität: 06.02.2007 DE 102007006621
(71) Anmelder: Andersen, Günter Sven, 24986 Satrup (DE)
(72) Erfinder: Andersen, Günter Sven, 24986 Satrup (DE)
(74) Vertreter: Dantz, Jan Henning

(57) **Zusammenfassung**

Ein Einkaufsroller (1) mit einem im wesentlichen L-förmigen Gestell (2) mit daran angeschlossenen Laufrollen (3) und mit einer Tasche (4), die einerseits mit ihrem Boden (4a) auf dem unteren, kürzeren Schenkel (20) des Gestelles (2) abgestützt und andererseits in ihrem oberen Endbereich (4b) am längeren Schenkel (21) des Gestelles (2) lösbar befestigt ist, ist so ausgebildet, dass die Tasche (4) mittels einer einen Querholm (21c) des Gestelles (2) von oben übergreifenden, haubenartigen Aufhängevorrichtung (6) am Querholm (21c) lösbar befestigt und dabei insbesondere in Querrichtung auf Spannung gehalten ist.

Gleichzeitig wird auch eine Stabilisierung der Tasche (4) in ihrer Längsrichtung erreicht.

## Beschreibung

Die vorliegende Erfindung betrifft einen Einkaufsroller mit einem im wesentlichen L-förmigen Gestell mit daran angeschlossenen Laufrollen und mit einer Tasche, die einerseits mit ihrem Boden auf dem unteren, kurzen Schenkel des Gestelles abgestützt und andererseits in ihrem oberen Endbereich am längeren Schenkel des Gestelles befestigt ist.

Einkaufsroller der vorerwähnten Art sind in vielerlei Ausführungsformen bekannt.

So können sich derartige Einkaufsroller unterscheiden durch die Größe und Anzahl der Laufrollen, ebenso durch die Gestaltung des Gestelles, wobei hier Konstruktionen bekannt sind, bei denen das gesamte Gestell einstückig ausgebildet ist, ebenso gibt es Gestelle, die zur Verringerung des Platzbedarfes bei Nichtgebrauch im Bereich des längeren Schenkel geteilt sind und entweder teleskopartig zusammengeschoben oder um eine Gelenkachse zusammenklappbar sind.

Die Befestigung der Taschen erfolgt bisher über an der Rückseite der Taschen befestigte Riemen oder dergleichen, welche den längeren Schenkel des Gestelles umgreifen.

Da die Taschen selbst aus einem flexiblen Material hergestellt sind, werden diese bislang zur Versteifung in ihren Eckbereichen, z.B. mit eingenähten Drahtbügeln und/oder mit Versteifungspappen oder dergleichen versehen.

Die Steifigkeit der Taschen ist deshalb besonders erwünscht, weil hierdurch die Beladung der Taschen erheblich vereinfacht und darüber hinaus auch die Präsentation eines entsprechenden Einkaufsrollers in einem Verkaufsraum verbessert wird.

Der vorliegenden Erfindung liegt die Aufgabe zugrunde, einen Einkaufsroller der gattungsgemäßen Art zu schaffen, bei dem zumindest auf einen Teil der Versteifungseinlagen verzichtet werden kann, ohne dass hierdurch Nachteile bei der Befüllung und/oder der Präsentation eines entsprechenden Einkaufsrollers in Kauf genommen werden müssen.

Diese Aufgabe wird erfindungsgemäß dadurch gelöst, dass die Tasche mittels einer einen Querholm des Gestelles von oben übergreifenden, haubenartigen Aufhängevorrichtung am Querholm lösbar befestigt und dabei insbesondere in Querrichtung auf Spannung gehalten ist.

Die haubenartige Aufhängevorrichtung dient somit einmal zur Verbindung und Lagesicherung der Tasche gegenüber dem längeren Schenkel des Gestelles und andererseits dazu, den Rückseitenbereich der Tasche ausreichend zu versteifen dadurch, dass die Tasche zumindest im oberen Randbereich in Querrichtung auf Spannung gehalten und auch in Längsrichtung stabilisiert ist.

Somit kann insbesondere im Rückseitenbereich auf zusätzliche Versteifungsmittel verzichtet werden, wodurch sich beträchtliche Einsparungen bei der Fertigung insbesondere der Tasche ergeben.

Eine besonders preiswerte Realisierung dieser Vorteile wird dadurch erreicht, dass die haubenartige Aufhängevorrichtung den Querholm zumindest im Bereich seiner stirnseitigen Enden übergreift und dabei jeweils an einem horizontalen und einem vertikalen Abschnitt des Querholmes anliegt.

Mit anderen Worten wird bei einer derartigen Gestaltung der Aufhängevorrichtung lediglich der Eckbereich eines Querholmes übergriffen, was bei von Haus aus verhältnismäßig eigensteifem Material der Tasche durchaus ausreichend sein kann, um diese im gewünschten Sinne zu stabilisieren.

Insbesondere bei der Verwendung von weniger eigensteifem Material kann es vorteilhaft sein, wenn die haubenartige Aufhängevorrichtung sich über den gesamten Querholm erstreckt.

Hierdurch ergibt sich insbesondere in vertikaler Richtung eine vollständige Lagesicherung der Tasche, d.h., die Tasche kann in ihrem oberen Endbereich auch nicht nur bereichsweise "durchhängen".

Grundsätzlich würde es für die erwünschte Funktion ausreichend sein, wenn die Aufhängevorrichtung in haubenartiger Ausführungsform zur Unterseite hin offen ist. Da aber hierdurch zumindest theoretisch die Gefahr besteht, dass die Tasche unbeabsichtigt vom Querholm abgehoben werden könnte, ist es nach einem weiteren Ausführungsbeispiel der Erfindung vorgesehen, die haubenartige Aufhängevorrichtung im Bereich ihrer Unterkante bzw. Unterkanten an der Taschenrückseite zu fixieren.

Dabei ist es denkbar, die Unterkante bzw. die Unterkanten der Aufhängevorrichtung durch Klettbänder an der Taschenrückseite zu fixieren.

Ebenso ist es möglich, die Unterkante bzw. die Unterkanten der Aufhängevorrichtung an der Taschenrückseite durch Knöpfe, Druckknöpfe oder dergleichen zu fixieren.

Die haubenartige Aufhängevorrichtung kann vorteilhafterweise aus dem gleichen Material wie die Tasche hergestellt sein, es ist aber auch denkbar, für die haubenartige Aufhängevorrichtung Materialien zu wählen, die von dem der Tasche abweichen, sei es aus Stabilitätsgründen oder um ein bestimmtes Design eine Tasche zu realisieren.

Ein Ausführungsbeispiel der Erfindung ist in den beigefügten Zeichnungen dargestellt und wird im folgenden näher beschrieben.

Es zeigen:
- Figur 1: eine Seitenansicht eines Gestelles eines erfindungsgemäßen Einkaufsrollers
- Figur 2: eine Ansicht in Richtung des Pfeiles II in Figur 1
- Figur 3: eine der Figur 1 entsprechende Seitenansicht des Einkaufsrollers mit einer Tasche
- Figur 4: eine Teilansicht in Richtung des Pfeiles IV in Figur 3
- Figur 5: einen Schnitt nach der Linie V-V in Figur 4.

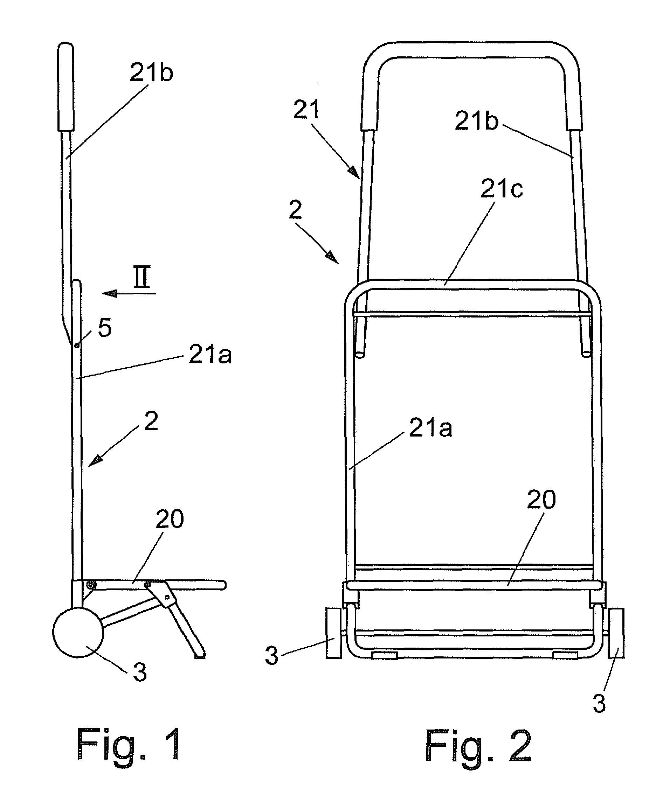

Der in den Zeichnungen dargestellte und insgesamt mit dem Bezugszeichen 1 bezeichnete Einkaufsroller umfasst ein im wesentlichen L-förmiges Gestell 2 mit daran angeschlossenen Laufrollen 3 (gezeigt in den Figuren 1 und 2) sowie eine Tasche 4, die mit ihrem Boden 4a auf dem unteren, kürzen Schenkel 20 des Gestelles 2 abgestützt und in ihrem oberen Endbereich 4b in noch zu beschreibender Weise mit dem längeren Schenkel 21 des Gestelles 2 verbunden ist.

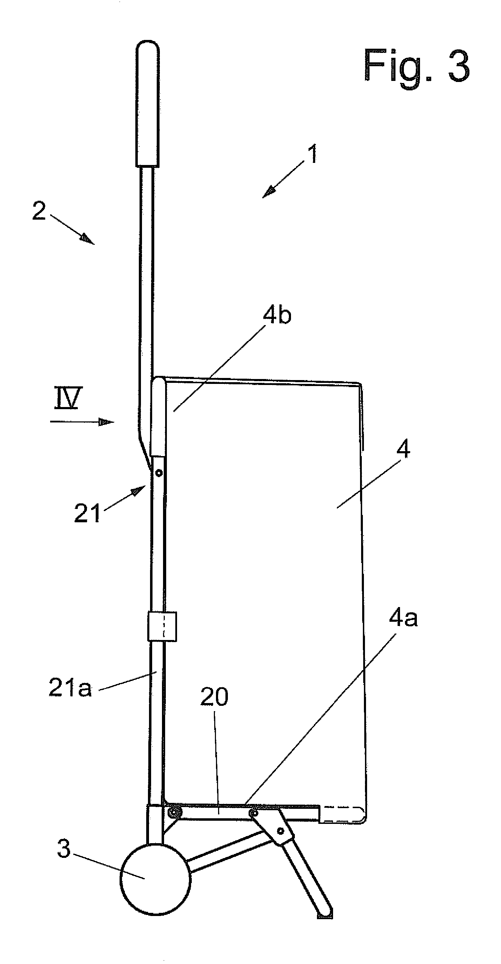

Im dargestellten Ausführungsbeispiel ist der längere Schenkel 21 des Gestelles 2 zweiteilig ausgebildet und umfasst einen unteren, mit dem kürzeren Schenkel 20 vorzugsweise einstückig hergestellten oder beliebigerweise verbundenen unteren Abschnitt 21 a und einen damit über ein Gelenk 5 verbundenen, oberen Bügelabschnitt 21b. Dieser obere Bügelabschnitt 21b kann um das Gelenk 5 aus seiner in den Figuren 1 bis 3 gezeigten Gebrauchslage heraus nach unten abgeklappt werden, so dass der gesamte Einkaufsroller 1 platzsparend verstaut werden kann.

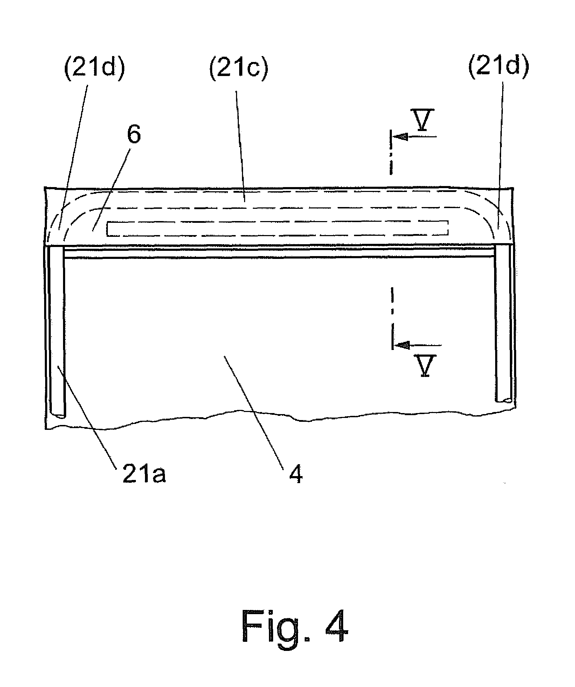

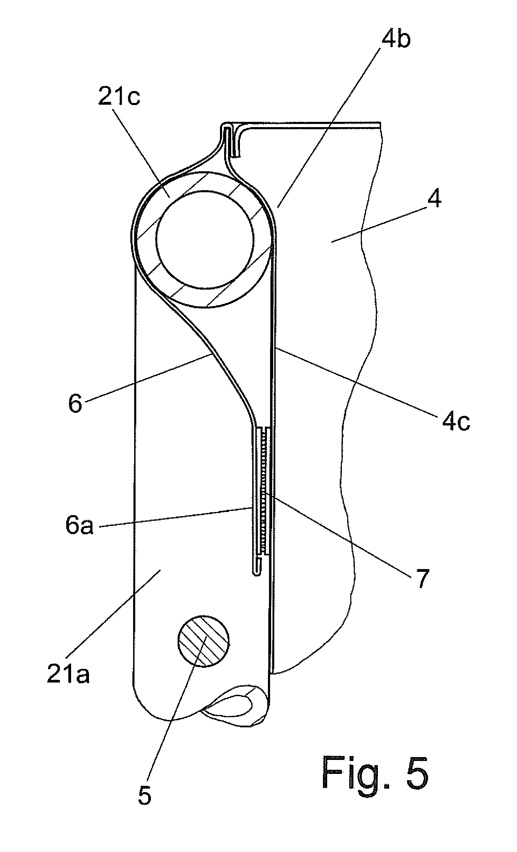

Der untere Abschnitt 21 a des längeren Schenkels 21 des Gestelles 2 weist einen Querholm 21c auf, der, was die Figuren 4 und 5 deutlich zeigen, von einer haubenartigen Aufhängevorrichtung 6, welche im oberen Endbereich 4b der Tasche 4 befestigt ist, übergriffen wird. Im dargestellten Ausführungsbeispiel erstreckt sich die haubenartige Aufhängevorrichtung 6 über die gesamte Breite des Querholmes 21 c, was aus Figur 4 besonders deutlich hervorgeht.

Die Tasche 4 wird somit in vertikaler Richtung am Querholm 21c abgestützt und von diesem getragen.

Wie Figur 4 weiterhin deutlich macht, übergreift die Aufhängevorrichtung 6 auch noch einen seitlichen vertikal verlaufenden Bereich 21d des Querholmes 21c, wobei die Aufhängevorrichtung 6 so dimensioniert ist, dass der Querholm 21c unter Erzielung einer bestimmten Vorspannung der Tasche 4 in Querrichtung in die Auf hängevorrichtung 6 einführbar ist.

Durch diese Befestigungsart der Tasche 4 am Querholm 21 c wird sichergestellt, dass die Tasche 4 im Aufhängebereich stabilisiert wird, da der obere Randbereich der Tasche 4 sowohl vertikal wie auch horizontal sicher gegenüber dem Querholm 21c fixiert ist.

Bei Taschen 4 aus vergleichsweise eigensteifem Material könnte unter Umständen auf eine vollständig über die gesamte Breite des Querholmes 21 c verlaufende Aufhängevorrichtung 6 verzichtet und diese mittig geteilt bzw. unterbrochen sein.

Denkbar wäre es auch, die Aufhängevorrichtung 6 so zu gestalten, dass zwischen zwei Eckabschnitten im stirnseitigen Endbereich des Querholmes 21 c über den mittleren Abschnitt des Querholmes 21 c hinweggesehen mehrere, gleichmäßig zueinander beabstandete Schlaufen vorgesehen sind.

Sowohl herstellungstechnisch wie auch optisch ist allerdings eine geschlossene, wie dargestellt ausgebildete Aufhängevorrichtung 6 bevorzugt.

Wie Figur 5 deutlich macht, ist die Aufhängevorrichtung 6 im Bereich ihrer durchlaufenden unteren Kante 6a über Klettbänder 7 an der Rückwand 4c der Tasche 4 festgelegt.

Hier ist es auch dankbar, zur Fixierung der Unterkante 6a der Aufhängevorrichtung 6 an der Rückwand 4c der Tasche 4 Knöpfe, Druckknöpfe oder dergleichen vorzusehen.

In jedem Falle wird die Tasche 4 durch die erfindungsgemäße Verbindung mit dem Querholm 21c derart fixiert und stabilisiert, dass auf die Verwendung zusätzlicher Versteifungsmittel zumindest im Rückwandbereich der Tasche 4 völlig verzichtet werden kann.

Hierdurch ergibt sich eine erhebliche Kosteneinsparung einerseits durch die damit einhergehende Materialeinsparung und andererseits durch die hiermit einhergehende vereinfachte Fertigung der Tasche 4.

Dennoch ist die Tasche 4 im angebundenen Zustand bezüglich ihres Füllraumes frei zugänglich und kann somit von einem Benutzer problemlos befüllt werden, außerdem ist die Tasche 4 so weit versteift, dass diese sich auch im unbeladenen Zustand in einem optisch guten, d.h., nicht durchhängenden Zustand präsentieren lässt.

Abschließend sei noch darauf hingewiesen, dass der erfindungsgemäße Gedanke natürlich auch bei einem insgesamt einstückigen längeren Schenkel 21 des Gestelles 2 realisierbar ist, hier wäre dann lediglich in der erforderlichen Höhe dieses Schenkels 21 ein separater Querholm anzubringen, auf dem dann die Tasche 4 mit ihrem oberen, rückseitigen Endbereich aufgehängt werden kann.

## Patentansprüche

1. Einkaufsroller (1) mit einem im wesentlichen L-förmigen Gestell (2) mit daran angeschlossenen Laufrollen (3) und mit einer Tasche (4), die einerseits mit ihrem Boden (4a) auf dem unteren, kürzeren Schenkel (20) des Gestelles (2) abgestützt und andererseits in ihrem oberen Endbereich (4b) am längeren Schenkel (21) des Gestelles (2) lösbar befestigt ist, **dadurch gekennzeichnet, dass** die Tasche (4) mittels einer einen Querholm (21c) des Gestelles (2) von oben übergreifenden, haubenartigen Aufhängevorrichtung (6) am Querholm (21 c) lösbar befestigt und dabei insbesondere in Querrichtung auf Spannung gehalten ist.

2. Einkaufsroller nach Anspruch 1, **dadurch gekennzeichnet, dass** die haubenartige Aufhängevorrichtung (6) den Querholm (21 c) zumindest im Bereich seiner stirnseitigen Enden übergreift und dabei jeweils an einem horizontalen und an einem vertikalen Abschnitt (21d) des Querholmes (21c) anliegt.

3. Einkaufsroller nach Anspruch 1 oder 2, **dadurch gekennzeichnet, dass** die haubenartige Aufhängevorrichtung (6) sich über den gesamten Querholm (21 c) erstreckt.

4. Einkaufsroller nach einem der vorhergehenden Ansprüche, **dadurch gekennzeichnet, dass** die haubenartige Aufhängevorrichtung (6) im Bereich ihrer Unterkante (6a) bzw. Unterkanten (6a) an der Taschenrückseite (4c) fixiert ist.

5. Einkaufsroller nach Anspruch 4, **dadurch gekennzeichnet, dass** die Unterkante (6a) bzw. die Unterkanten (6a) der Aufhängevorrichtung (6) durch Klettbänder (7) an der Taschenrückseite (4c) fixiert ist bzw. sind.

6. Einkaufsroller nach Anspruch 4, **dadurch gekennzeichnet, dass** die Unterkante (6a) bzw. die Unterkanten (6a) der Aufhängevorrichtung (6) an der Taschenrückseite (4c) durch Knöpfe, Druckknöpfe oder dergleichen fixiert ist bzw. sind.

7. Einkaufsroller nach einem der vorhergehenden Ansprüche, **dadurch gekennzeichnet, dass** die Aufhängevorrichtung aus dem gleichen Material gefertigt ist wie die Tasche (4).

8. Einkaufsroller nach einem der Ansprüche 1 bis 6, **dadurch gekennzeichnet, dass** die Aufhängevorrichtung (6) aus einem anderen Material hergestellt ist als die Tasche (4).

9. Einkaufsroller nach einem der vorhergehenden Ansprüche, **dadurch gekennzeichnet, dass** der Querholm (21c) ein integraler Bestandteil des Gestelles (2) ist.

10. Einkaufsroller nach einem der Ansprüche 1 bis 8, **dadurch gekennzeichnet, dass** der Querholm (21c) als separates Bauteil hergestellt und am Gestell (2) befestigt ist.
